# EUROPEAN PATENT SPECIFICATION

(11) **EP 4 351 205 B1**
(45) Date of publication and mention of the grant of the patent: **28.10.2026**
(21) Application number: 22836794.2
(22) Date of filing: 30.06.2022
(51) Int. Cl.: H04L 41/0663

(54) **ACTIVE-STANDBY SWITCHING PROCESSING METHOD AND SYSTEM, AND ELECTRONIC APPARATUS AND STORAGE MEDIUM**
VERFAHREN UND SYSTEM ZUR VERARBEITUNG VON AKTIV-STANDBY-UMSCHALTUNG SOWIE ELEKTRONISCHE VORRICHTUNG UND SPEICHERMEDIUM
PROCÉDÉ ET SYSTÈME DE TRAITEMENT DE COMMUTATION DE VEILLE ACTIVE, ET APPAREIL ÉLECTRONIQUE ET SUPPORT DE STOCKAGE

(30) Priority: 09.07.2021 CN 202110779347
(43) Date of publication of application: 10.04.2024
(73) Proprietor: Sunwave Communications Co., Ltd., Hangzhou, Zhejiang 310053 (CN)
(72) Inventor: XU, Peigao, Hangzhou, Zhejiang 310053 (CN); JIAN, Tuo, Hangzhou, Zhejiang 310053 (CN); XU, Yaxue, Hangzhou, Zhejiang 310053 (CN)
(74) Representative: Meyer-Dulheuer MD Legal Patentanwälte PartG mbB
(86) International application number: PCT/CN2022/102719
(87) International publication number: WO 2023/280041

(56) References cited:
- CN-A- 1 463 081
- CN-A- 1 567 889
- CN-A- 102 025 551
- CN-A- 109 768 884
- CN-A- 113 645 650
- US-A1- 2005 102 562
- US-A1- 2006 085 669
- US-A1- 2012 151 550
- US-B2- 10 064 143
- US-B2- 9 678 842

## Description

### TECHNICAL FIELD

The present invention generally relates to a field of communication, and in particular, to an active-standby switching processing method and system, and an electronic apparatus and a storage medium.

### BACKGROUND

Wireless communication systems have important applications in the maintenance of public safety, and in the process of application, quality of signals belonging to a public safety frequency band is highly required. In the wireless communication systems, when a communication equipment of a certain segment fails, it may lead to a problem that communication service is interrupted for a long period of time, and it is necessary to wait for maintenance personnel to go to a scene to repair, in order to solve such problem, it is possible to adopt a solution of automatic switching of dual communication systems or multi-communication systems.

In the related art, a design of active-standby switching of the communication systems is to detect hardware failure of the equipment in an active system by software and then send abnormal commands to a standby system to achieve switching. In this process, a state of the active system is first detected as abnormal, and a state of a self-maintained information table is changed to abnormal and recorded, and then a switching command and a state updating command are sent to the standby system. Although state updating information is stored in the self-maintained information table, it is necessary for the two systems to record state information of the active system and the standby system, respectively, which leads to resource waste and low processing efficiency in the process of switching between the active system and the standby system.

For the issue of resource waste and low processing efficiency in the process of switching between the active system and the standby system in the related art, no effective solution has yet been proposed.

US2006/085669A1 discloses a system and method for supporting automatic protection switching between multiple node pairs using common agent architecture. US2005/102562A1 discloses a method and system to provide a failover cluster system and a program installation method using this failover cluster system.

### SUMMARY

The invention is set out in the appended set of claims. According to various embodiments of the present invention, an active-standby switching processing method and system, and an electronic apparatus and a storage medium are provided.

In a first aspect, an active-standby switching processing method is provided according to independent claim 1.

In some embodiments, the acquiring the device detection result of the active system further includes:
acquiring a preset alarm item and a preset alarm level; and
acquiring an alarm flag corresponding to the alarm item in the active system according to the alarm level, and acquiring the device detection result of the active system according to detection information for the alarm flag in a first preset cycle.

In some embodiments, the detection signal comprises a square wave signal, and the instructing the active system to send the detection signal to the external warning line according to the device detection result of the active system, and executing the switching operation between the active system and the standby system according to the detection signal further includes:
instructing the active system to send the square wave signal to the external warning line in a case that the device detection result of the active system is device normal;
instructing the active system to stop sending the square wave signal to the external warning line in a case that the device detection result of the active system is device alarm; and
executing the switching operation according to a statistical result of the square wave signal in a second preset cycle.

In some embodiments, the active system includes an access unit and at least two first remote units, all of the at least two first remote units are cascaded with each other, the standby system includes at least two second remote units, and the at least two first remote units are connected to the at least two second remote units by the external warning line, respectively; and
the executing the switching operation between the active system and the standby system according to the detection signal further includes:
sending a switching flag to the at least two first remote units in cascade in turn according to the detection signal in a case that the device detection result of the active system is matched with the access unit, and all of the at least two first remote units being configured to switch with the at least two second remote units based on the switching flag; and
sending the switching flag to at least one alarm remote unit according to the detection signal in a case that the device detection result of the active system is matched with the at least one alarm remote unit of the at least two first remote units, and the at least one alarm remote unit being configured to switch with a corresponding second remote unit based on the switching flag.

In some embodiments, the executing the switching operation between the active system and the standby system according to the detection signal further includes:
switching the active system to the standby system according to the detection signal; and
switching the standby system back to the active system when it is detected that the active system returns to normalcy in a case that the active system is switched to the standby system.

In some embodiments, the number of the standby system is at least two, and the active system is connected to all the at least two standby systems by the external warning line, respectively;
the executing the switching operation between the active system and the at least two standby systems according to the detection signal further includes:
acquiring a preset list of priorities for all of the at least two standby systems, and acquiring a target standby system with the highest priority among the at least two standby systems according to the list of priorities; and
executing the switching operation between the active system and the target standby system according to the detection signal.

In a second aspect, an active-standby switching processing system is provided in an embodiment of the present invention. The system includes an active system, a control apparatus, and a standby system. The control apparatus is connected to the active system and the standby system, respectively, and the active system is connected to the standby system by an external warning line. The control apparatus is configured to perform the active-standby switching processing method in the above first aspect.

In a third aspect, an electronic apparatus is provided in an embodiment of the present invention, including a memory and a processor. The memory stores a computer program, and the processor is configured to execute the computer program to perform the active-standby switching processing method in the above first aspect.

In a fourth aspect, a storage medium is provided in an embodiment of the present invention, storing a computer program. The computer program is executed by a processor to perform the active-standby switching processing method in the above first aspect.

Details of one or more embodiments of the present invention are set forth in the following accompanying drawings and descriptions. Other features, objectives, and advantages of the present invention become obvious with reference to the description, the accompanying drawings, and the claims.

### BRIEF DESCRIPTION OF THE DRAWINGS

Reference may be made to one or more of the accompanying drawings for a purpose of better describing and illustrating the embodiments and/or examples of those applications disclosed herein. Additional details or examples used to describe the accompanying drawings should not be considered a limitation on the scope of any of the disclosed applications, the embodiments and/or examples presently described, and the best mode of these applications as presently understood.
FIG. 1 is a schematic diagram of an application scenario of an active-standby switching processing method in one or more embodiments.
FIG. 2 is a flowchart of an active-standby switching processing method in one or more embodiments.
FIG. 3 is a flowchart of an active-standby switching processing method in one or more embodiments.
FIG. 4 is a flowchart of an active-standby switching processing method in one or more embodiments.
FIG. 5 is a flowchart of an active-standby switching process in one or more embodiments.
FIG. 6 is a block diagram of an architecture of an active-standby switching processing system in one or more embodiments.
FIG. 7 is a structural diagram of an interior of a computer device in one or more embodiments.
FIG. 8 is a block diagram of an architecture of an active-standby switching processing system in one or more embodiments.
FIG. 9 is a schematic diagram of an electronic apparatus in one or more embodiments.

### DETAILED DESCRIPTION OF THE EMBODIMENT

The technical solutions in embodiments of the present invention will be described clearly and completely below with reference to the accompanying drawings in the embodiments of the present invention. Apparently, the described embodiments are merely some of rather than all of the embodiments of the present invention. In addition, it should be understood that, although the efforts made in such a development process may be complex and lengthy, some changes in design, manufacture, or production based on the technical contents disclosed in the present invention are merely conventional technical means to those skilled in the art relating to the contents disclosed in the present invention, and should not be construed as insufficiency of the contents disclosed in the present invention.

Reference to "embodiment" in the present invention means that a particular feature, structure, or characteristic described in conjunction with an embodiment may be included in at least one embodiment of the present invention. Presence of the phrase "embodiment" at various points in the description does not necessarily always refer to the same embodiment, nor is it a separate or alternative embodiment that is mutually exclusive of other embodiments. It is understood by one skilled in the art, both explicitly and implicitly, that the embodiments described in the present invention may be combined with other embodiments without conflict.

Unless defined otherwise, technical terms or scientific terms involved in the present invention have the same meanings as would generally understood by those skilled in the technical field of the present invention. In the present invention, "a", "an", "one", "the", and other similar words do not indicate a quantitative limitation, which may be singular or plural. The terms such as "comprise", "include", "have" and any variants thereof involved in the present invention are intended to cover a non-exclusive inclusion, for example, processes, methods, systems, products, or devices including a series of steps or modules (units) are not limited to these steps or modules (units) listed, and may include other steps or modules (units) not listed, or may include other steps or modules (units) inherent to these processes, methods, systems, products, or devices. Words such as "join", "connect", "couple", and the like involved in the present invention are not limited to physical or mechanical connections, and may include electrical connections, whether direct or indirect. "A plurality of" involved in the present invention means two or more. The term "and/or" describes an association relationship between associated objects and represents that three relationships may exist. For example, A and/or B may represent the following three cases: only A exists, both A and B exist, and only B exists. Generally, the character "/" indicates an "or" relationship between the associated objects. The terms "first", "second", "third", and the like involved in the present invention are only intended to distinguish similar objects and do not represent specific ordering of the objects.

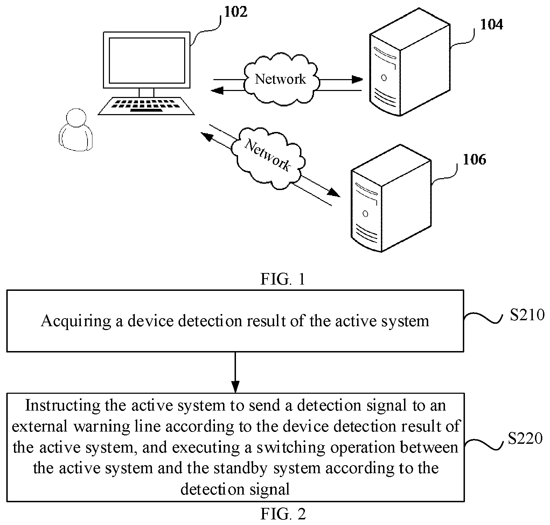

In the present embodiment, an active-standby switching processing method is provided. FIG. 1 is a schematic diagram of an application scenario of an active-standby switching processing method in an embodiment of the present invention. Referring to FIG. 1, in the application scenario, a user terminal 102, a first server 104, and a second server 106 are included. The user terminal 102 is in communication with the first server 104 and the second server 106 by a network. The first server 104 is provided with an active system 62, and the second server 106 is provided with a standby system 66. The active system 62 is connected to the standby system 66 by an external warning line 68. After it is detected that information such as an alarm item is configured by the user terminal 102, the active system 62 actively polls the detection to obtain a device detection result and sends a detection signal to the external warning line 68 according to the device detection result. The standby system 66 reads the detection signal by polling and executes a switching operation between the active system 62 and the standby system 66. The user terminal 102 may be, but is not limited to, various personal computers, laptops, smartphones, tablets, and portable wearable devices, both the first server 104 and the second server 106 may be implemented with an independent server or a server cluster including a plurality of servers, and such first server 104 and such second server 106 may be the same server or may be different.

The present invention provides an active-standby switching processing method which is applied to the active system 62 and the standby system 66. The active system 62 is connected to the standby system 66 by the external warning line 68. FIG. 2 is a flowchart of an active-standby switching processing method in an embodiment. Referring to FIG. 2, the flowchart includes step 210 and step 220.

Step 210 includes acquiring a device detection result of the active system.

Both the active system 62 and the standby system 66 may be the same type of communication systems. For example, the active system 62 and the standby system 66 may be Distributed Antenna Systems (DAS), Long Term Evolution (LTE) systems, or 5G system, etc., and the active system 62 and the standby system 66 should be capable of signaling interaction therebetween. It may be understood that during transmission of signals in the active system 62, when a communication device fails, communication service would be interrupted, and at this moment, it is necessary to quickly switch to the standby system 66, so that the standby system 66 may quickly respond and work to restore communication signals.

The external warning line 68 may refer to a connecting line that cooperates with an external alarm interface of the active system 62 and an external alarm interface of the standby system 66 for transmitting a detection signal, which in turn has effect of transmitting commands to switch between the active system and the standby system and recovery commands. Since the external warning line 68 is dedicated to the active system and the standby system, and the active system and the standby system are in close proximity when in use, the external warning line 68 is simple to deploy. It should be added that communication systems in the related art only interact with each other by a network, and the present invention may connect the active system 62 and the standby system 66 in hardware by the external warning line 68, which may facilitate signaling interaction between the active system and the standby system, and transmit level signals quickly in hardware, so that automatic switching of the active system and the standby system may be achieved even in a case of a power failure of a system, which may effectively improve processing efficiency and stability of the switching of the active system and the standby system. The above device detection result may refer to detection results corresponding to devices included in the active system 62, which may be actively detected by the active system 62.

Step 220 includes instructing the active system to send a detection signal to an external warning line according to the device detection result of the active system, and executing a switching operation between the active system and the standby system according to the detection signal.

The active system 62 may send the detection signal to the external warning line 68 according to the acquired device detection result. It could be understood that when the active system 62 polls to read the device detection result, since it is detected in a created thread program, minimal resource consumption generated by this process may also be released in time after the detection is completed, thus avoiding additional resource consumption in the process of switching between the active system and the standby system. The standby system 66 may detect the detection signal of the external alarm interface of the standby system 66 at regular intervals. In a case that the detection signal indicates an alarm or power failure of the device, the active system 62 may stop sending the detection signal, and at the same time, in order to protect the devices in the active system 62, radio frequency output may be turned off, and the standby system 66 may switch on its own radio frequency signal and start to work, so as to carry out the switching operation.

It should be added that the detection signal may be a level signal, a square wave signal, or a sinusoidal signal, etc. For example, the detection signal may be a level signal, and the active system 62 may send a high-level signal once to the external warning line 68 when the device detection result indicates the alarm of the device, and the active system 62 may send a low-level signal once when the device detection result indicates that the device is normal. The active system 62 may switch off its own radio frequency signal while sending the high-level signal, and the standby system 66 may switch on its own radio frequency signal to start working when the standby system 66 polls to read the high-level signal. Alternatively, the detection signal may be a sinusoidal signal, and the active system 62 may send the sinusoidal signal when the device detection result indicates an alarm. At this moment, the active system 62 may switch off the radio frequency signal, and the standby system 66 may switch on the radio frequency signal when detecting the sinusoidal signal, thereby executing the switching operation. Alternatively, the detection signal may be a different form of signal, as long as the signal may indicate whether or not the device detection result is an alarm, which will not be repeated herein.

In the related art, a switching process of the active system and the standby system requires each system to record state information thereof, which leads to resource waste and low processing efficiency in the switching process of the active system and the standby system. In the present invention, by means of the above step 210 and step 220, the external warning line 68 is deployed between the active system 62 and the standby system 66, a detection signal is generated between the active system 62 and the standby system 66 to realize automatic switching between the active system 62 and the standby system 66, and the generated detection signal does not need to take up additional resources, thus enabling rapid switching among multiple communication systems while maintaining communication quality, solving a problem of resource waste and low processing efficiency in the switching process of the active system and the standby system, and realizing automatic switching among multiple communication systems based on software control.

In some embodiments, the step 210 may further include step 211 and step 212.

Step 211 may include acquiring a preset alarm item and a preset alarm level.

Specifically, both the active system 62 and the standby system 66 may be connected to a user terminal, the user terminal may be pre-configured with a user interface. The user can configure various alarm items by the user interface, such as an over-temperature alarm, a losing lock alarm, an under-power alarm, an over-power alarm, and so on. For example, when the user configures the item of over-temperature alarm of the device to be enabled off in the user interface, and configures the losing lock alarm and the over-power alarm to be enabled on by default, the preset alarm item at this moment includes the losing lock alarm and the over-power alarm. In addition, the user may also configure alarm levels corresponding to various alarm item in the user interface, which may include a warning level, a secondary level, a primary level, and a severe level. For example, a drop-down box corresponding to each alarm item may be set in the user interface, and the user may select from five options in the drop-down box, namely, enable off, warning, secondary, primary, and severe. After the above selection is completed, software deployed in the active system 62 would internally record the alarm items and the alarm levels, and subsequent switching of the active system and the standby system may be determined based on recorded information. For example, the active system 62 may be switched when an alarm item with an alarm level of severe generates an alarm, or may be switched automatically by default when the active system 62 is powered off. The above various alarm items may also be provided with a respective corresponding alarm detection mechanism.

Step 212 may include acquiring an alarm flag corresponding to the alarm item in the active system according to the alarm level, and acquiring the device detection result of the active system according to detection information for the alarm flag in a first preset cycle.

Specifically, after the user interface is configured with the alarm item, the above software may internally poll the detection mechanism corresponding to various alarm items. For example, when the alarm item is configured as an over-temperature alarm of the device and an alarm level is configured, the software may begin to direct that the actual temperature of the device corresponding to each device in the active system 62 is detected cyclically at intervals such as 5 seconds. The detected actual temperature of the device may be compared with a preset over-temperature alarm threshold (e.g., 90°C). When the actual temperature of the device is greater than the over-temperature alarm threshold, the alarm flag would be recorded once. The alarm flag may be continuously recorded within the first preset cycle, and when too many alarm flags are recorded within the first preset cycle, for example, more than 80%, the device may be considered to have been in an over-temperature state, detection information indicative of the alarm may be generated, and the device detection result corresponding to device alarm may be acquired according to the detection information. After acquiring the device detection result, the device detection result may also be visualized on the user interface. For example, alarm indicators corresponding to various alarm items may be set on the user interface, and when a detection result of a certain alarm item is generated for the alarm, it is indicated that the corresponding alarm indicator displays as a red light, and vice versa, it is indicated that the corresponding alarm indicator displays as a green light, so as to facilitate the user being able to grasp a situation of the device detection in real time.

It should be noted that the first preset cycle may be set by the user in advance, for example, the first preset period may be set as 1 minute. The first preset cycle may be set and the alarm flag may be counted within the first preset cycle, thus avoiding a problem of false alarm during the switching process of the active system and the standby system and improving accuracy of the switching between the active system and the standby system.

In the related art, a condition of determining a failure of the active system 62 in the switching between the active system and the standby system is fixed and cannot be flexibly configured by the user. The present invention may include the above step 211 and step 212, the detection information within the first preset cycle may be acquired by the alarm items and alarm levels preset by the user, and then the device detection result may be obtained, thereby realizing configuration alarm levels in the user interface as a judgement condition of switching of the active system and the standby system, making a switching condition of the active system and the standby system more comprehensive, and facilitating flexible configuration of the judgement condition for use by different users. Automatic switching between the active system and the standby system may be triggered based on the device alarm, which may further improve processing efficiency of the switching between the active system and the standby system.

In some embodiments, the detection signal may include a square wave signal, and the step 220 may further include step 221 and step 222.

Step 221 may include instructing the active system to send the square wave signal to the external warning line in a case that the device detection result of the active system is device normal, and instructing the active system to stop sending the square wave signal to the external warning line in a case that the device detection result of the active system is device alarm.

Specifically, when the active system 62 polls the detection of various devices at regular intervals, high and low levels sent on the external warning line 68 may be alternately output, which in turn forms the square wave signal, such as 10101010101010. When detecting that the device detection result indicates generation of an alarm or a power failure, the active system 62 may stop sending the square wave signal, and the square wave signal may be converted to 1111111111010 or 0000000000101010.

Step 222 may include executing the switching operation according to a statistical result of the square wave signal in a second preset cycle.

Specifically, the standby system 66 may detect level change of the external alarm interface of the standby system 66 at intervals such as 2 seconds, and count all rising edges and falling edges of the square wave signal within the second preset cycle. When the total number of the rising edges and the falling edges of the square wave signal is counted as less than 20% of a normal number, it is considered to be a switching instruction sent from the active system 62, which means that the active system 62 stops sending the square wave signal at this moment, and then the standby system 66 may switch on its own radio frequency signal to complete active-standby switch. Experiments have shown that during the switching process, the time from switching off the radio frequency signal of the active system 62 to normal operation of the signal of the standby system 66 may be maintained at 18 seconds. The second preset cycle may be set by the user in advance, for example, the second preset cycle may be set as 36 seconds. The second preset cycle may be set and the square wave signal may be counted within the second preset cycle, thus avoiding the problem of false alarms during the switching process of the active system and the standby system, and further improving the accuracy of the switching between the active system and the standby system.

In the above step 221 and step 222, since level switching of the square wave signal is rapid and statistical accuracy is high, the automatic switching between the active system and the standby system may be achieved based on the square wave signal sent by the active system 62 in the external warning line 68 in the present embodiment, which may effectively improve the processing efficiency and accuracy of the switching between the active system and the standby system.

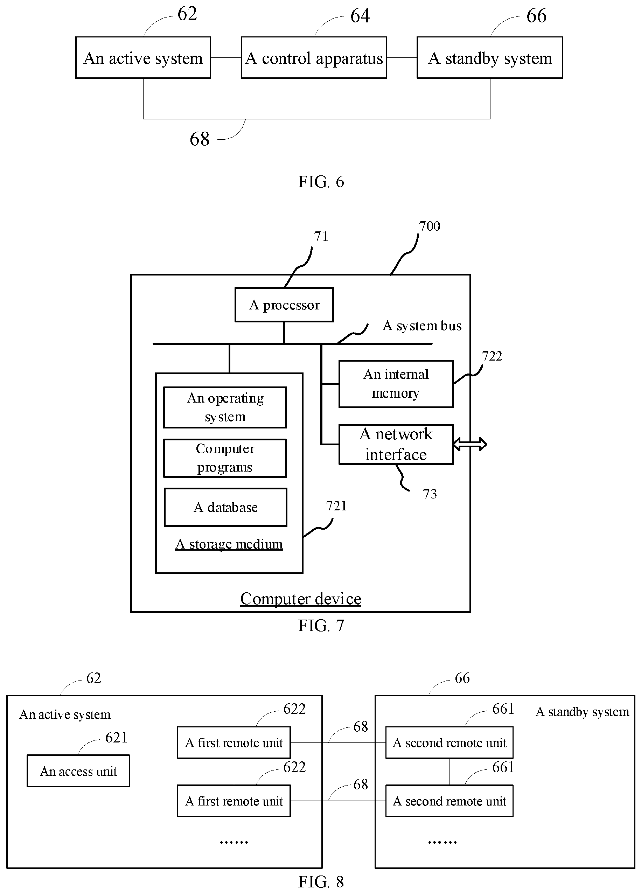

In some embodiments, an active-standby switching processing method is provided. Referring to FIG. 8, the active system 62 may include an access unit 621 and at least two first remote units 622, all of the at least two first remote units 622 may be cascaded with each other, and the standby system 66 may include at least two second remote units 661. The at least two first remote units 622 may be connected to the at least two second remote units 661 by the external warning line 68, respectively. It may be appreciated that the access unit 621 in the active system 62 is configured to access analogue signals from a base station, to digitally integrate analogue signals of various downlinks into a Common Public Radio Interface (CPRI), and to transmit digital signals to each of the at least two first remote units 622 by optical signals in order to distribute public safety signals to a coverage area. Each of the at least two second remote units 661 of the standby system 66 is also configured to receive signals and distribute the signals to the coverage area.

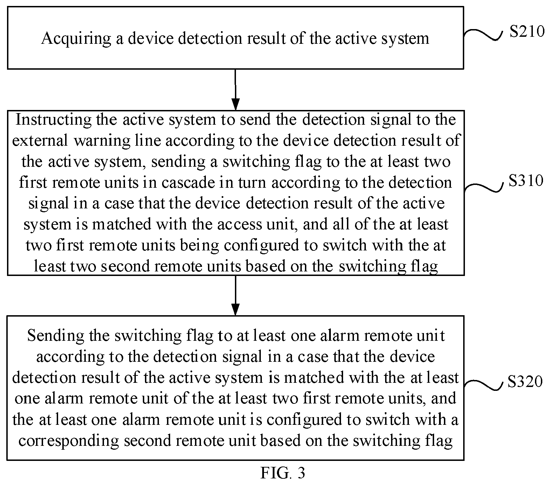

FIG. 3 is a flowchart of another active-standby switching processing method according to an embodiment of the present invention. Referring to FIG. 3, the flowchart may include step 210 shown in FIG. 2, and further include the following step 310 and step 320.

Step 310 may include instructing the active system to send the detection signal to the external warning line according to the device detection result of the active system, sending a switching flag to the at least two first remote units in cascade in turn according to the detection signal in a case that the device detection result of the active system is matched with the access unit, and all of the at least two first remote units being configured to switch with the at least two second remote units based on the switching flag.

Taking into account the fact that devices with multiple frequency bands are usually connected to the same network when in use, when only one of the at least two first remote units 622 fails, switching an entire active system 62 to the standby system 66 at this moment would cause a brief interruption of device with other frequency bands, so it is necessary to determine, based on the device detection result, whether it is alarm of the entire active system 62 or alarm of a separate device in the active system 62, in order to determine whether the active system needs to be switched or the at least two first remote units 622 need to be switched. For example, when the device detection result corresponds to the access unit 621, i.e., serious alarm of the access unit 621 is detected, a switching flag for alarm may be sent to each of the at least two first remote units 622 in cascade. After receiving the switching flag, the at least two first remote units 622 may send the detection signal, based on the switching flag, to corresponding external warning line 68, respectively. Various external warning lines 68 may be matched and connected between the at least two first remote units 622 and the at least two second remote units 661, respectively, and the at least two second remote units 661 may execute the switching operation with the at least two first remote units 622 based on the detected signal read by polling, respectively.

Step 320 may include sending the switching flag to at least one alarm remote unit according to the detection signal in a case that the device detection result of the active system is matched with the at least one alarm remote unit of the at least two first remote units, and the at least one alarm remote unit is configured to switch with a corresponding second remote unit based on the switching flag.

Specifically, when the active system 62 polls the detection of each alarm item of the device, and it is detected according to the device detection result that at least one of all the first remoted units 622 is malfunctioning, the malfunctioning first remote unit 622 may be used as the alarm remote unit, and only the alarm remote unit may be switched with a corresponding second remote unit 661 of the standby system 66. Since the cascaded first remote units 622 have different frequency bands, in a case that a single first remote unit 622 fails and the entire active system 62 is directly switched, signals of all the frequency bands may disappear for a few seconds. At the above steps of the present embodiment, the malfunctioning first remote unit 622 may be switched individually. At this moment, only a signal of a frequency band corresponding to the first remote unit 622 which is switched may disappear for a few seconds without affecting signals of the other frequency bands, thereby facilitating improving processing stability of the switching process of the active system and the standby system.

At the above step 310 and step 320, based on the device detection result, it is determined whether the entire active system 62 needs to be switched or the at least two first remote units need to be switched. After determining is ended, the above switching may be completed by the at least two first remote units of the active system 62, thus avoiding signal interruption of other devices caused by the switching of the entire active system 62 in a case of failure of one or more of the at least two first remote units, and effectively improving stability and accuracy of the processing of the switching process of the active system and the standby system.

In some embodiments, the executing the switching operation between the active system 62 and the standby system 66 according to the detection signal may further include: switching the active system 62 to the standby system 66 according to the detection signal; and switching the standby system 66 back to the active system 62 when it is detected that the active system 62 returns to normalcy in a case that the active system 62 is switched to the standby system 66. Specifically, based on a detection mechanism of step 210 and step 220, the active system 62 may also continuously acquire the device detection result when the active system 62 is stopped or on standby, and in a case that the active system 62 determines that the alarm is cancelled based on the device detection result, the active system 62 may switch on the radio frequency signal and begin to work normally. At this moment, sending of the detection signal may be resumed. The standby system 66 may detect the detection signal of the external alarm interface of the standby system 66, and re-enter a standby state and switch off radio frequency signal thereof. In the above embodiments, the active system 62 may be enabled to automatically and quickly resume operation state, further improving the processing efficiency of the switching between the active system and the standby system.

In some embodiments, the number of the standby system 66 may be at least two, and the active system 62 may be connected to all of the at least two standby systems 66 by the external warning line 68, respectively. The executing the switching operation between the active system 62 and the at least two standby systems 66 according to the detection signal may further include: acquiring a preset list of priorities for all of the at least two standby systems 66, and acquiring a target standby system with the highest priority among the at least two standby systems 66 according to the list of priorities; and executing the switching operation between the active system 62 and the target standby system according to the detection signal. When only a single standby system 66 is exist in an actual application, only one first remote unit 622 of the active system 62 may be connected to the second remote unit 661 of the standby system 66 by the external warning line 68. When a plurality of standby systems 66 are exist, the at least two first remote units 622 of the active system 62 may be connected correspondingly to the at least two second remote units 661 of the standby systems 66, and the priorities of all the standby systems 66 may be set. When it is detected that the switching between the active system and the standby system is needed, the standby system 66 to be switched over may be selected according to the preset list of priorities. It should be noted that the list of priorities may include the priorities corresponding to all the standby systems 66 that are preset by the user. The priorities of the standby systems 66 may be set according to an order in which the at least two second remote units 661 are connected in cascade, or interfaces with priorities may be added to the access units 621 of the standby systems 66, and so on. In the above embodiments, the plurality of standby systems 66 may be connected to the active system 62 by the external warning line 68, thereby improving scalability in the switching process of the active system and the standby system. The active system 62 may be efficiently and automatically switched to the plurality of standby systems 66, thereby effectively improving safety of the switching between the active system and the standby system.

Executing the switching operation between the active system 62 and the standby system 66 according to the detection signal includes: storing the detection signal to a state table deployed in the standby system 66 to obtain a signal state and executing the switching operation according to the signal state. Specifically, in the standby system 66, the detection signal may be polled to read at intervals such as 1.5 seconds, to obtain the signal state of in-cycle transformation, and the signal state may be stored into the state table. For example, 18 signal states may be dynamically stored, and then the switching operation may be executed based on the signal state stored in the state table. In the related art, the switching between the active system and the standby system requires that state information of the active system and the standby system is recorded separately and individually in both of the active system and the standby system. In the embodiments of the present invention, the detection signal transmitted by the external warning line 68 may be stored in the state table of the standby system 66, thereby reducing occupancy of system resources, and further reducing consumption of resources in the switching process of the active system and the standby system.

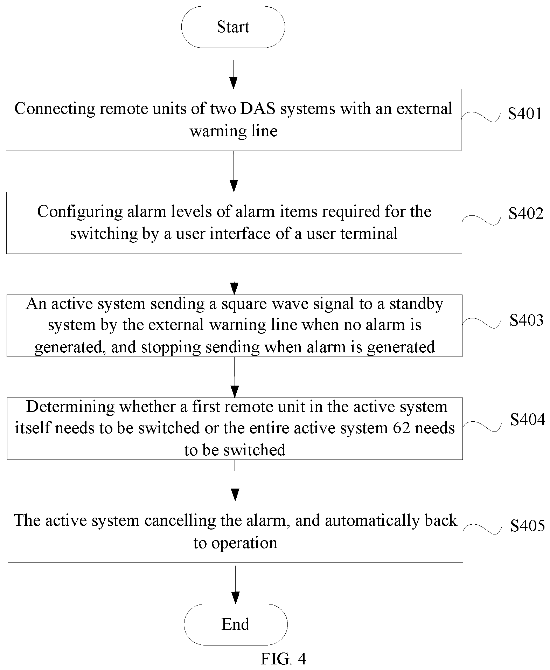

Embodiments of the present invention may be described in detail below in relation to practical application scenarios. The DAS system is taken as an example for both the active system 62 and the standby system 66. FIG. 4 is a flowchart of an active-standby switching processing method according to an alternative embodiment of the present invention. Referring to FIG. 4, the flowchart may include the following step 401 to step 405.

Step 401 may include starting an active-standby switching process by connecting remote units of two DAS systems with an external warning line 68.

Step 402 may include configuring alarm levels of alarm items required for the switching by a user interface of a user terminal.

Step 403 may include an active system 62 sending a square wave signal to a standby system 66 by the external warning line 68 when no alarm is generated, and stopping sending when alarm is generated.

Step 404 may include determining whether a first remote unit 622 in the active system 62 itself needs to be switched or the entire active system 62 needs to be switched. The time taken from detection of the alarm to successful switching may be less than 20 seconds.

Step 405 may include the active system 62 cancelling the alarm, automatically back to operation, and ending the active-standby switching processing.

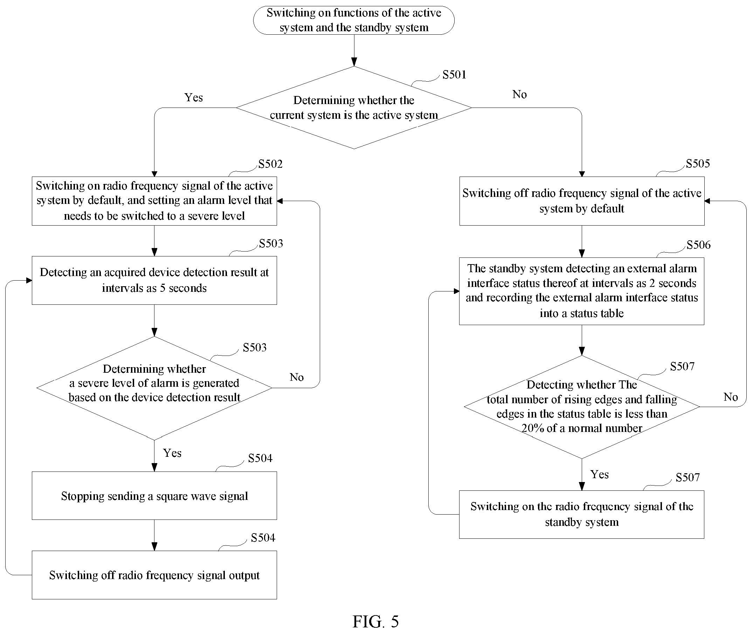

FIG. 5 is a flowchart of an active-standby switching process according to an alternative embodiment of the present invention. Referring to FIG. 5, the flowchart may include the following step 501 to step 507.

Step 501 may include switching on functions of the active system and the standby system, determining whether the current system is the active system 62. The current system may be set by the user on the user interface of the user terminal described above.

Step 502 may include switching on radio frequency signal of the active system 62 by default when a determining result of the above step 501 is yes, and setting an alarm level that needs to be switched to a severe level.

Step 503 may include detecting an acquired device detection result at intervals as 5 seconds, and determining whether a severe level of alarm is generated based on the device detection result; if not, cyclically executing the above step 502.

Step 504 may include if a determining result of the above step 503 is yes, stopping sending a square wave signal, switching off radio frequency signal output, and cyclically executing the above step 503 to continue to detect the acquired device detection result.

Step 505 may include if the determining result of the above step 501 is no, at this moment, the current system being the standby system 66, switching off radio frequency signal of the active system 62 by default.

Step 506 may include the standby system 66 detecting an external alarm interface status thereof at intervals as 2 seconds and recording the external alarm interface status into a status table.

Step 507 may include detecting whether the total number of rising edges and falling edges in the status table is less than 20% of a normal number, if no, cyclically executing the above step 505; if yes, switching on the radio frequency signal of the standby system 66, and cyclically executing the above step 506.

It should be noted that the steps illustrated in the process described above or in the flowchart of the accompanying drawings may be performed in a computer system, such as a set of computer-executable instructions, and although a logical sequence is illustrated in the flowchart, the steps illustrated or described may be performed in a different order than herein in some cases.

The present embodiment further provides an active-standby switching processing system, and FIG. 6 is a block diagram of an architecture of the active-standby switching processing system according to an embodiment of the present application. Referring to FIG. 6, the system includes an active system 62, a control apparatus 64, and a standby system 66. The control apparatus 64 is connected to the active system 62 and the standby system 66, respectively, and the active system 62 is connected to the standby system 66 by an external warning line 68. The control device 64 is configured to acquire a device detection result of the active system 62, instruct the active system 62 to send a detection signal to the external warning line 68 according to the device detection result, and execute a switching operation between the active system 62 and the standby system 66 according to the detection signal.

In the above embodiment, the external warning line 68 is deployed between the active system 62 and the standby system 66, a detection signal is generated between the active system 62 and the standby system 66 to realize automatic switching between the active system 62 and the standby system 66, and the generated detection signal does not need to take up additional resources, thus enabling rapid switching among multiple communication systems while maintaining communication quality, solving a problem of resource waste and low processing efficiency in the switching process of the active system and the standby system, and realizing automatic switching among multiple communication systems based on software control.

In some embodiments, the control apparatus 64 may be further configured to acquire a preset alarm item and a preset alarm level, acquire an alarm flag corresponding to the alarm item in the active system 62 according to the alarm level, and acquire the device detection result according to detection information for the alarm flag in a first preset cycle.

In some embodiments, the detection signal may include a square wave signal, the control apparatus 64 may be further configured to instruct the active system 62 to send the square wave signal to the external warning line 68 in a case that the device detection result is device normal, instruct the active system to stop sending the square wave signal to the external warning line in a case that the device detection result is device alarm, and execute the switching operation according to a statistical result of the square wave signal in a second preset cycle.

In some embodiments, the active system 62 may include an access unit 621 and at least two first remote units 622, all of the at least two first remote units 622 may be cascaded with each other, and the standby system 66 may include at least two second remote units 661. The at least two first remote units 622 may be connected to the at least two second remote units 661 by the external warning line 68, respectively. The control apparatus 64 may be further configured to send a switching flag to the at least two first remote units 622 in cascade in turn according to the detection signal in a case that the device detection result is matched with the access unit 621, and all of the at least two first remote units are configured to switch with the at least two second remote units 661 based on the switching flag. The control apparatus 64 may be further configured to send the switching flag to at least one alarm remote unit according to the detection signal in a case that the device detection result is matched with the at least one alarm remote unit of the at least two first remote units 622, and the at least one alarm remote unit is configured to switch with a corresponding second remote unit based on the switching flag.

In some embodiments, the control apparatus 64 may be further configured to switch the active system 62 to the standby system 66 according to the detection signal, and switch the standby system 66 back to the active system 62 when it is detected that the active system 62 returns to normalcy in a case that the active system 62 is switched to the standby system 66.

In some embodiments, the number of the standby system 66 may be at least two, the control apparatus 64 may be further configured to acquire a preset list of priorities for all of the at least two standby systems 66, acquire a target standby system with the highest priority among the at least two standby systems 66 according to the list of priorities, and execute the switching operation between the active system 62 and the target standby system according to the detection signal.

The control apparatus 64 is configured to store the detection signal to a state table deployed in the standby system 66 to obtain a signal state and execute the switching operation according to the signal state.

In some embodiments, a computer device 700 is provided, and the computer device 700 may be a server. FIG. 7 is a structural diagram of an interior of a computer device in an embodiment of the present invention. Referring to FIG. 7, the computer device may include a processor 71, a memory and a network interface 73 connected by a system bus. The processor 71 of the computer device is configured to provide computing and control capabilities. The memory of the computer device may include a storage medium 721 and an internal memory 722. The storage medium 721 may store an operating system, computer programs and a database. The internal memory 722 may provide an environment for operation of the operating system and computer programs in the storage medium 721. The database of the computer device is configured to store the detection signal. The network interface 73 of the computer device is configured to communicate with an external terminal by a network connection. The computer programs may be executed by the processor 71 to implement an active-standby switching processing method.

It could be understood by one skilled in the art that the structure shown in FIG. 7 is only a block diagram of a part of the structure related to the present invention and does not constitute a limitation of the computer device which the present invention is applied to, and a specific computer device may include more or less parts than shown in the figure, or a combination of some parts. The specific computer device may have a different component arrangement.

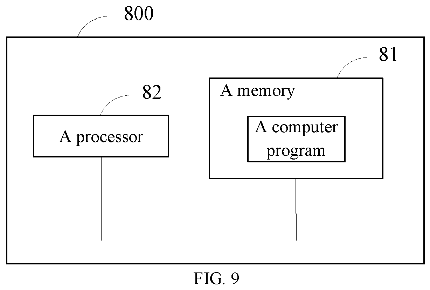

Referring to FIG. 9, an electronic apparatus 800 is provided in an embodiment, including a memory 81 and a processor 82. The memory 81 stores a computer program, and the processor 82 is configured to execute the computer program to perform steps in any of the above method embodiments.

Alternatively, the electronic apparatus may further include a transmission device and an input/output device. The transmission device may be connected to the processor 82, and the input/output device may be connected to the processor 82.

Alternatively, in the present embodiment, the processor 82 may be configured to perform the following step 1 and step 2 by the computer program.

Step 1 includes acquiring a device detection result of the active system.

Step 2 includes instructing the active system to send a detection signal to an external warning line according to the device detection result, and executing a switching operation between the active system and the standby system according to the detection signal.

It should be noted that specific examples in the present embodiment may be obtained with reference to the examples described in the above embodiments and alternative implementations. Details are not described again in the present embodiment.

In addition, in combination with the active-standby switching processing method in the above embodiments, an embodiment of the present invention may provide a storage medium 721 for implementation. A computer program is stored in the storage medium 721, and the computer program is executed by a processor to perform the active-standby switching processing method in any of the above embodiments.

One skilled in the art may understand that all or part of the steps in the method of the above embodiments, may be implemented by hardware related to the computer program. The computer program may be stored in a non-volatile computer-readable storage medium, the computer program may include processes of the above embodiments when executed. Any reference to memory, storage, database or other media used in each embodiment provided in the present invention may include non-volatile and/or volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a random-access memory (RAM) or an external cache memory. As a description rather than limitation, RAM is available in many forms, such as static RAM (SRAM), dynamic RAM (DRAM), synchronous DRAM (SDRAM), dual data rate SDRAM (DDRSDRAM), enhanced SDRAM (ESDRAM), synchronous link DRAM (SLDRAM), Rambus RAM (RDRAM), Direct Rambus Dynamic RAM (DRDRAM), Rambus Dynamic RAM (RDRAM), etc.

It should be noted that the above modules may be a functional module or a program module, and may be implemented either by software or by hardware. For modules implemented by hardware, the above modules may be located in the same processor, or the above modules may be located in different processors in any combination.

The present invention may further provide an electronic apparatus, including a processor and a memory that stores a computer program running on the processor, and the computer program may be executed by the processor to implement the steps of the above network traffic anomaly detection method.

## Claims

1. An active-standby switching processing method, applied to an active system (62) and a standby system (66), wherein the active system (62) is connected to the standby system (66) by an external warning line (68), and the method comprises:
acquiring a device detection result of the active system (62); and
instructing the active system (62) to send a detection signal to the external warning line (68) according to the device detection result of the active system (62), and executing a switching operation between the active system (62) and the standby system (66) according to the detection signal;
**characterized in that** executing the switching operation between the active system (62) and the standby system (66) according to the detection signal further comprises:
storing the detection signal to a state table deployed in the standby system (66) to obtain a signal state and executing the switching operation according to the signal state.

2. The active-standby switching processing method of claim 1, wherein the acquiring the device detection result of the active system (62) further comprises:
acquiring a preset alarm item and a preset alarm level; and
acquiring an alarm flag corresponding to the alarm item in the active system (62) according to the alarm level, and acquiring the device detection result of the active system (62) according to detection information for the alarm flag in a first preset cycle.

3. The active-standby switching processing method of claim 1, wherein the detection signal comprises a square wave signal, and the instructing the active system (62) to send the detection signal to the external warning line (68) according to the device detection result of the active system (62), and executing the switching operation between the active system (62) and the standby system (66) according to the detection signal further comprises:
instructing the active system (62) to send the square wave signal to the external warning line (68) in a case that the device detection result of the active system (62) is device normal;
instructing the active system (62) to stop sending the square wave signal to the external warning line (68) in a case that the device detection result of the active system (62) is device alarm; and
executing the switching operation according to a statistical result of the square wave signal in a second preset cycle.

4. The active-standby switching processing method of claim 1, wherein the active system (62) comprises an access unit (621) and at least two first remote units (622), all of the at least two first remote units (622) are cascaded with each other, and the standby system (66) comprises at least two second remote units (661), wherein the at least two first remote units (622) are connected to the at least two second remote units (661) by the external warning line (68), respectively; and
the executing the switching operation between the active system (62) and the standby system (66) according to the detection signal further comprises:
sending a switching flag to the at least two first remote units (622) in cascade in turn according to the detection signal in a case that the device detection result of the active system (62) is matched with the access unit (621), wherein all of the at least two first remote units (622) are configured to switch with the at least two second remote units (661) based on the switching flag; and
sending the switching flag to at least one alarm remote unit according to the detection signal in a case that the device detection result of the active system (62) is matched with the at least one alarm remote unit of the at least two first remote units (622), wherein the at least one alarm remote unit is configured to switch with a corresponding second remote unit (661) based on the switching flag.

5. The active-standby switching processing method of claim 1, wherein the executing the switching operation between the active system (62) and the standby system (66) according to the detection signal further comprises:
switching the active system (62) to the standby system (66) according to the detection signal; and
switching the standby system (66) back to the active system (62) when it is detected that the active system (62) returns to normalcy in a case that the active system (62) is switched to the standby system (66).

6. The active-standby switching processing method of claim 1, wherein the number of the standby system (66) is at least two, and the active system (62) is connected to all of the at least two standby systems (66) by the external warning line (68), respectively;
the executing the switching operation between the active system (62) and the at least two standby systems (66) according to the detection signal further comprises:
acquiring a preset list of priorities for all of the at least two standby systems (66), and acquiring a target standby system with the highest priority among the at least two standby systems (66) according to the list of priorities; and
executing the switching operation between the active system (62) and the target standby system according to the detection signal.

7. An active-standby switching processing system, **characterized by** comprising an active system (62), a control apparatus (64), and a standby system (66), wherein the control apparatus (64) is connected to the active system (62) and the standby system (66), respectively, and the active system (62) is connected to the standby system (66) by an external warning line (68);
wherein the control apparatus (64) is configured to perform the active-standby switching processing method of any one of claims 1 to 6.

8. An electronic apparatus (800), comprising a memory (81) and a processor (82), **characterized in that** the memory (81) stores a computer program, and the processor (82) is configured to execute the computer program to perform the active-standby switching processing method of any one of claims 1 to 6.

9. A storage medium (721), storing a computer program, **characterized in that** the computer program is executed by a processor to perform the active-standby switching processing method of any one of claims 1 to 6.

## Patentansprüche

1. Verfahren zur Umschaltung zwischen Aktiv- und Standby-Modus, angewandt auf ein aktives System (62) und ein Standby-System (66), wobei das aktive System (62) über eine externe Warnleitung (68) mit dem Standby-System (66) verbunden ist und das Verfahren umfasst:
Erfassen eines Geräteerkennungsergebnisses des aktiven Systems (62); und
Anweisen des aktiven Systems (62), entsprechend dem Geräteerkennungsergebnis des aktiven Systems (62) ein Erkennungssignal an die externe Warnleitung (68) zu senden, und Ausführen eines Umschaltvorgangs zwischen dem aktiven System (62) und dem Standby-System (66) entsprechend dem Erkennungssignal;
**dadurch gekennzeichnet, dass** das Ausführen des Umschaltvorgangs zwischen dem aktiven System (62) und dem Standby-System (66) entsprechend dem Erkennungssignal ferner umfasst:
das Speichern des Erkennungssignals in einer im Standby-System (66) bereitgestellten Zustandstabelle, um einen Signalzustand zu erhalten, und das Ausführen des Umschaltvorgangs entsprechend dem Signalzustand.

2. Verfahren zur Aktiv-Standby-Umschaltung nach Anspruch 1, wobei das Erfassen des Geräteerkennungsergebnisses des aktiven Systems (62) ferner umfasst:
Erfassen eines voreingestellten Alarmelements und einer voreingestellten Alarmstufe; und
Erfassen eines dem Alarmelement entsprechenden Alarmflags im aktiven System (62) entsprechend dem Alarmpegel und Erfassen des Geräteerkennungsergebnisses des aktiven Systems (62) entsprechend den Erkennungsinformationen für das Alarmflag in einem ersten voreingestellten Zyklus.

3. Verfahren zur Umschaltung zwischen Aktiv- und Standby-Modus nach Anspruch 1, wobei das Erkennungssignal ein Rechtecksignal umfasst und das Anweisen des aktiven Systems (62), das Erkennungssignal entsprechend dem Geräteerkennungsergebnis des aktiven Systems (62) an die externe Warnleitung (68) zu senden, sowie das Ausführen des Umschaltvorgangs zwischen dem aktiven System (62) und dem Standby-System (66) entsprechend dem Erkennungssignal ferner umfasst:
das Anweisen des aktiven Systems (62), das Rechtecksignal an die externe Warnleitung (68) zu senden, falls das Geräteerkennungsergebnis des aktiven Systems (62) Gerät normal lautet;
das aktive System (62) anweisen, das Senden des Rechtecksignals an die externe Warnleitung (68) zu beenden, falls das Geräteerkennungsergebnis des aktiven Systems (62) Gerätealarm lautet; und
Ausführen des Schaltvorgangs entsprechend einem statistischen Ergebnis des Rechtecksignals in einem zweiten voreingestellten Zyklus.

4. Verfahren zur Umschaltung zwischen Aktiv- und Standby-Modus nach Anspruch 1, wobei das aktive System (62) eine -Zugriffseinheit (621) und mindestens zwei erste Remote-Einheiten (622) umfasst, alle der mindestens zwei ersten Ferngeräte (622) sind miteinander kaskadiert, und das Standby-System (66) umfasst mindestens zwei zweite Ferngeräte (661), wobei die mindestens zwei ersten Ferngeräte (622) jeweils über die externe Warnleitung (68) mit den mindestens zwei zweiten Ferngeräten (661) verbunden sind; und
das Ausführen des Umschaltvorgangs zwischen dem aktiven System (62) und dem Standby-System (66) entsprechend dem Erkennungssignal umfasst ferner:
das Senden eines Umschaltflags an die mindestens zwei ersten Ferngeräte (622) nacheinander in Kaskade entsprechend dem Erkennungssignal in einem Fall, in dem das Geräteerkennungsergebnis des aktiven Systems (62) mit der Zugangseinheit (621) übereinstimmt, wobei alle der mindestens zwei ersten Ferngeräte (622) so konfiguriert sind, dass sie auf der Grundlage des Umschaltflags mit den mindestens zwei zweiten Ferngeräten (661) umschalten; und
Senden des Umschaltflags an mindestens eine Alarm-Fernstation entsprechend dem Erkennungssignal in dem Fall, dass das Geräteerkennungsergebnis des aktiven Systems (62) mit der mindestens einen Alarm-Fernstation der mindestens zwei ersten Fernstationen (622) übereinstimmt, wobei die mindestens eine Alarm-Fernstation so konfiguriert ist, dass sie auf der Grundlage des Umschaltflags mit einer entsprechenden zweiten Fernstation (661) umschaltet.

5. Verfahren zur Aktiv-Standby-Umschaltung nach Anspruch 1, wobei das Ausführen des Umschaltvorgangs zwischen dem aktiven System (62) und dem Standby-System (66) entsprechend dem Erkennungssignal ferner umfasst:
das Umschalten vom aktiven System (62) auf das Standby-System (66) entsprechend dem Erkennungssignal; und
Umschalten des Standby-Systems (66) zurück auf das aktive System (62), wenn festgestellt wird, dass das aktive System (62) wieder normal funktioniert, falls das aktive System (62) auf das Standby-System (66) umgeschaltet wurde.

6. Verfahren zur Aktiv-Standby-Umschaltung nach Anspruch 1, wobei die Anzahl der Standby-Systeme (66) mindestens zwei beträgt und das aktive System (62) jeweils über die externe Warnleitung (68) mit allen mindestens zwei Standby-Systemen (66) verbunden ist;
wobei die Durchführung des Umschaltvorgangs zwischen dem aktiven System (62) und den mindestens zwei Standby-Systemen (66) gemäß dem Erkennungssignal ferner umfasst:
das Erfassen einer voreingestellten Prioritätenliste für alle der mindestens zwei Standby-Systeme (66) und das Ermitteln eines Ziel-Standby-Systems mit der höchsten Priorität unter den mindestens zwei Standby-Systemen (66) gemäß der Prioritätenliste; und
Durchführung des Umschaltvorgangs zwischen dem aktiven System (62) und dem Ziel-Standby-System entsprechend dem Erkennungssignal.

7. Ein Aktiv-Standby-Umschaltverarbeitungssystem, **gekennzeichnet durch** ein aktives System (62), eine Steuerungsvorrichtung (64), sowie ein Standby-System (66), wobei die Steuervorrichtung (64) jeweils mit dem aktiven System (62) und dem Standby-System (66) verbunden ist und das aktive System (62) über eine externe Warnleitung (68) mit dem Standby-System (66) verbunden ist;
wobei die Steuervorrichtung (64) so konfiguriert ist, dass sie das Verfahren zur Umschaltung zwischen Aktiv- und Standby-Betrieb gemäß einem der Ansprüche 1 bis 6 ausführt.

8. Elektronisches Gerät (800), umfassend ein Speicher (81) und einen Prozessor (82), **dadurch gekennzeichnet, dass** der Speicher (81) ein Computerprogramm speichert und der Prozessor (82) so konfiguriert ist, dass er das Computerprogramm ausführt, um das Verfahren zum Umschalten zwischen Aktiv- und Standby-Modus gemäß einem der Ansprüche 1 bis 6 durchzuführen.

9. Speichermedium (721), auf dem ein Computerprogramm gespeichert ist, **dadurch gekennzeichnet, dass** das Computerprogramm von einem Prozessor ausgeführt wird, um das Verfahren zur Umschaltung zwischen Aktiv- und Standby-Modus gemäß einem der Ansprüche 1 bis 6 durchzuführen.

## Revendications

1. Procédé de commutation actif-veille, appliqué à un système actif (62) et à un système de veille (66), dans lequel le système actif (62) est connecté au système de veille (66) par une ligne d'alerte externe (68), et le procédé comprend:
l'acquisition d'un résultat de détection de dispositif du système actif (62); et
ordonner au système actif (62) d'envoyer un signal de détection à la ligne d'alerte externe (68) en fonction du résultat de détection de dispositif du système actif (62), et exécuter une opération de commutation entre le système actif (62) et le système de secours (66) en fonction du signal de détection;
**caractérisé en ce que** l'exécution de l'opération de commutation entre le système actif (62) et le système de secours (66) en fonction du signal de détection comprend en outre:
le stockage du signal de détection dans une table d'états déployée dans le système de secours (66) afin d'obtenir un état de signal, et l'exécution de l'opération de commutation en fonction de cet état de signal.

2. Procédé de traitement de commutation actif-de secours selon la revendication 1, dans lequel l'acquisition du résultat de détection de dispositif du système actif (62) comprend en outre:
l'acquisition d'un élément d'alarme prédéfini et d'un niveau d'alarme prédéfini; et
l'acquisition d'un indicateur d'alarme correspondant à l'élément d'alarme dans le système actif (62) en fonction du niveau d'alarme, et l'acquisition du résultat de détection de dispositif du système actif (62) en fonction des informations de détection relatives à l'indicateur d'alarme au cours d'un premier cycle prédéfini.

3. Procédé de commutation entre les modes actif et veille selon la revendication 1, dans lequel le signal de détection comprend un signal carré, et l'étape consistant à ordonner au système actif (62) d'envoyer le signal de détection à la ligne d'alerte externe (68) en fonction du résultat de détection du dispositif par le système actif (62), et à exécuter l'opération de commutation entre le système actif (62) et le système de veille (66) en fonction du signal de détection, comprend en outre:
ordonner au système actif (62) d'envoyer le signal en onde carrée à la ligne d'alerte externe (68) dans le cas où le résultat de la détection du dispositif par le système actif (62) indique que le dispositif est normal;
ordonner au système actif (62) de cesser d'envoyer le signal d'onde carrée à la ligne d'alerte externe (68) lorsque le résultat de la détection du système actif (62) indique une alarme du dispositif; et
exécuter l'opération de commutation en fonction d'un résultat statistique du signal carré au cours d'un deuxième cycle prédéfini.

4. Procédé de commutation actif-veille selon la revendication 1, dans lequel le système actif (62) comprend une unité d'accès à l' (621) et au moins deux premières unités distantes (622), toutes les au moins deux premières unités distantes (622) sont montées en cascade les unes avec les autres, et le système de secours (66) comprend au moins deux deuxièmes unités distantes (661), les au moins deux premières unités distantes (622) étant respectivement reliées aux au moins deux deuxièmes unités distantes (661) par la ligne d'alerte externe (68); et
l'exécution de l'opération de commutation entre le système actif (62) et le système de secours (66) en fonction du signal de détection comprend en outre:
l'envoi d'un indicateur de commutation aux au moins deux premières unités distantes (622) en cascade, à tour de rôle, en fonction du signal de détection, dans le cas où le résultat de la détection du dispositif du système actif (62) correspond à l'unité d'accès (621), lesdites au moins deux premières unités distantes (622) étant toutes configurées pour effectuer la commutation avec les au moins deux deuxièmes unités distantes (661) sur la base de l'indicateur de commutation; et
envoyer l'indicateur de commutation à au moins une unité distante d'alarme en fonction du signal de détection dans le cas où le résultat de la détection de dispositif du système actif (62) correspond à ladite au moins une unité distante d'alarme parmi les au moins deux premières unités distantes (622), ladite au moins une unité distante d'alarme étant configurée pour effectuer une commutation avec une deuxième unité distante correspondante (661) en fonction de l'indicateur de commutation.

5. Procédé de traitement de commutation actif-veille selon la revendication 1, dans lequel l'exécution de l'opération de commutation entre le système actif (62) et le système de veille (66) en fonction du signal de détection comprend en outre:
la commutation du système actif (62) vers le système de secours (66) en fonction du signal de détection; et
le retour du système de secours (66) vers le système actif (62) lorsqu'il est détecté que le système actif (62) revient à la normale, dans le cas où le système actif (62) a été basculé vers le système de secours (66).

6. Procédé de commutation actif-veille selon la revendication 1, dans lequel le nombre de systèmes de veille (66) est au moins égal à deux, et le système actif (62) est connecté respectivement à chacun des au moins deux systèmes de veille (66) par la ligne d'alerte externe (68);
l'exécution de l'opération de commutation entre le système actif (62) et les au moins deux systèmes de secours (66) en fonction du signal de détection comprend en outre:
l'acquisition d'une liste prédéfinie de priorités pour chacun des au moins deux systèmes de secours (66), et l'identification d'un système de secours cible présentant la priorité la plus élevée parmi les au moins deux systèmes de secours (66) conformément à la liste de priorités; et
l'exécution de l'opération de commutation entre le système actif (62) et le système de secours cible en fonction du signal de détection.

7. Système de traitement de commutation actif-veille, **caractérisé en ce qu'**il comprend un système actif (62), un dispositif de commande (64), et un système de secours (66), dans lequel le dispositif de commande (64) est connecté respectivement au système actif (62) et au système de secours (66), et le système actif (62) est connecté au système de secours (66) par une ligne d'alerte externe (68);
dans lequel l'appareil de commande (64) est configuré pour mettre en œuvre le procédé de commutation actif-de secours selon l'une quelconque des revendications 1 à 6.

8. Appareil électronique (800), comprenant une mémoire (81) et un processeur (82), **caractérisé en ce que** la mémoire (81) stocke un programme informatique, et le processeur (82) est configuré pour exécuter le programme informatique afin de mettre en œuvre le procédé de commutation entre les modes actif et veille selon l'une quelconque des revendications 1 à 6.

9. Support de stockage (721) stockant un programme informatique, **caractérisé en ce que** le programme informatique est exécuté par un processeur pour mettre en œuvre le procédé de commutation entre les modes actif et veille selon l'une quelconque des revendications 1 à 6.
